# EUROPÄISCHE PATENTANMELDUNG

(11) **EP 2 581 404 A1**
(43) Veröffentlichungstag der Anmeldung: **17.04.2013**
(21) Anmeldenummer: 11184585.5
(22) Anmeldetag: 11.10.2011
(51) Int. Cl.: C08K 3/00

(54) **Thermoplastische Formmasse und daraus hergestellte Formteile mit verbesserter Verschleißfestigkeit**

(71) Anmelder: BASF SE, 67056 Ludwigshafen (DE)
(72) Erfinder: Die Erfindernennung liegt noch nicht vor
(74) Vertreter: Schuck, Alexander

(57) **Zusammenfassung**

Die vorliegende Erfindung betrifft thermoplastische Formmassen und Formteile mit verbesserter Verschleißfestigkeit enthaltend mindestens eine thermoplastische Matrix M, mindestens eine Kohlenstoff-Verstärkungsfaser F, mindestens eine Kohlenstoff-Komponente K; mindestens eine Silikat-Komponente S, wobei die mindestens einen Silikat-Komponente S Partikel enthält, welche in einer Partikel-Dimension ein Längen/Dicken-Verhältnis von größer oder gleich 3 aufweisen, und mindestens ein Titandioxid T.

## Beschreibung

Die vorliegende Erfindung betrifft thermoplastische Formmassen, enthaltend mindestens eine thermoplastische Matrix M, mindestens eine Kohlenstoff-Verstärkungsfaser F, mindestens eine Kohlenstoff-Komponente K, mindestens eine Silicat-Komponente S, wobei die mindestens einen Silicat-Komponente S Partikel enthält, welche in einer Partikel-Dimension ein Längen/Dicken-Verhältnis von größer oder gleich 3 aufweisen, und mindestens ein Titandioxid T.

Weiterhin ist die vorliegende Anmeldung gerichtet auf ein Verfahren zur Herstellung der thermoplastischen Formmasse sowie auf Formteile mit verbesserter Verschleißfestigkeit, enthaltend die erfindungsgemäße, thermoplastische Formmasse. Die Formteile können insbesondere Anwendung finden im Automobil-, Flugzeug- oder Luftfahrtbereich, z.B. in Ölpumpen, Getriebesteuerungen, Gleitlagern, Zahnrädern, Walzen- und Kolbenbeschichtungen.

Für die Herstellung von Bauteilen und Werkstücken, die für Anwendungen mit hoher Verschleißbelastung geeignet sind, werden Formmassen benötigt, welche einerseits sehr gute tribologische Eigenschaften, wie einen geringen Reibungskoeffizienten und eine niedrige Verschleißrate, sowie andererseits auch eine hohe mechanische Festigkeit, wie ausreichende Zug- und Biegefestigkeiten, aufweisen.

Im Stand der Technik sind verschiedene verschleißfeste Bauteile und Werkstücke auf der Basis von Kunststoff-Kompositmaterialien beschrieben. Hierbei kommen oft Hochleistungskunststoffe, wie beispielsweise Polytetrafluorethylen (PTFE), Polyvinylidenfluorid (PVDF), Polyarylsulfon (z.B. PSU, PESU, PPSU), Polyetherketon (z.B. Polyetheretherketon PEEK) und Polyetherimid, aber auch andere thermoplastische Materialien mit niedrigerer Wärmeformbeständigkeit wie beispielsweise Polyester, Polyamid, Polyethylenterephthalat, Polypropylen, Polystyrol und Polystyrol-Copolymere, zusammen mit verschiedenen Füllstoffen zum Einsatz.

Um Formmassen bzw. Formteile mit niedrigen Reibungswerten zu erhalten, werden häufig so genannte Festschmierstoffe eingesetzt, beispielsweise Polytetrafluorethylen (PTFE), Graphit und/oder Molybdänsulfid (MoS₂).

Nachteilig ist, dass durch den Einsatz von Füllstoffen, wie z.B. Festschmierstoffen oder härtenden Füllstoffen (wie beispielsweise Titandioxid), in der Regel die mechanischen Eigenschaften der Formmassen deutlich verschlechtert werden.

Im Allgemeinen kann man Füllstoffe anhand ihrer Partikelform, insbesondere durch das Verhältnis von Länge zu Dicke der Füllstoff-Partikel (auch L/D-Verhältnis, Formfaktor oder Aspektverhältnis genannt) in verschiedenen Gruppen einteilen. Partikelförmige Füllstoffe mit kugelförmigen, sphäroiden oder ellipsoiden Partikeln weisen in der Regel ein L/D-Verhältnis im Bereich von 1 bis kleiner 3 auf. Nadelförmige oder plättchenförmige Füllstoffe weisen meist ein L/D-Verhältnis größer oder gleich 3 auf, wobei dieses L/D-Verhältnis bei plättchenförmigen Partikeln in zwei Partikel-Dimensionen und bei nadelförmigen Partikeln in einer Partikel-Dimension vorliegt. Bei L/D-Verhältnissen von größer 100 spricht man im Allgemeinen von faserförmigen Füllstoffen.

Im Stand der Technik wird beschrieben, dass sich verbesserte Reibungswerte durch möglichst kugelförmige und/oder besonders feinteilige Füllstoffpartikel ergeben. Das Dokument DE-A 10 2006 015 997 beschreibt beispielsweise den Einsatz von partikelförmigen Füllstoffen mit im wesentlichen sphäroiden und/oder ellipsoiden Partikeln in einer Matrix aus thermoplastischem Kunststoff.

Weiterhin wird im Stand der Technik eine Oberflächenmodifizierung von Füllstoffen beschrieben, um die Bindung zwischen Matrix und Füllstoffpartikeln zu verbessern. Das Dokument WO 2008/023076 beschreibt ein ultrafeines Oberflächen-modifiziertes Titandioxid und dessen Verwendung in einer polymeren Matrix. Das Dokument WO 2006/000454 beschreibt einen polymeren Werkstoff, insbesondere Polyesterfasern, enthaltend Titandioxid und einen partikelförmigen anorganischen Stoff mit geringerer Härte, z.B. Carbonat, Phosphat oder Silicat.

In WO 2003/103955 wird ein Gleitlagerverbundwerkstoff mit einem Gleitschichtmaterial enthaltend Polyetheretherketon (PEEK), einen Schmierstoff, z.B. ZnS und/oder Bariumsulfat, und Titandioxid als härtende Komponente, beschrieben. Es wird beschrieben, dass besonders gute Verschleißraten beim Einsatz von möglichst feinen Partikeln zu erreichen seien.

Eine Aufgabe der vorliegenden Erfindung besteht darin, eine gegenüber dem Stand der Technik verbesserte Formmassen mit verbesserten tribologischen Eigenschaften, d.h. niedriger Reibungskoeffizient und niedrige Verschleißrate, und ausreichenden mechanischen Eigenschaften, z.B. Zugmodul, und Zugfestigkeit, bereitzustellen. Die Formmasse soll einfach und kostengünstig herzustellen sein.

Es wurde nun überraschenderweise gefunden, dass mittels einer speziellen Kombination von Füllstoffen eine Optimierung der tribologischen und mechanischen Eigenschaften von thermoplastischen Formmassen erreicht werden kann. Es zeigten sich zudem synergistische Wirkungen der einzelnen Füllstoff-Komponenten in der erfindungsgemäßen Kombination. Überraschenderweise zeigte sich, dass sich die tribologischen Eigenschaften von thermoplastischen Formmassen durch den Einsatz eines Silicat-Füllstoffes enthaltend Partikel, welche in einer Partikel-Dimension ein Längen/Dicken-Verhältnis von größer oder gleich 3 aufweisen - insbesondere in Kombination mit weiteren Füllstoffen - deutlich verbessern lassen.

Diese Aufgabe wird gelöst durch die Bereitstellung einer thermoplastischen Formmasse enthaltend
i) mindestens eine thermoplastische Matrix M;
ii) mindestens eine Kohlenstoff-Verstärkungsfaser F;
iii) mindestens eine Kohlenstoff-Komponente K;
iv) mindestens eine Silicat-Komponente S, wobei die mindestens eine Silicat-Komponente S Partikel enthält, welche in einer Partikel-Dimension ein Längen/Dicken-Verhältnis von größer oder gleich 3 aufweisen; und
v) mindestens ein Titandioxid T.

Die erfindungsgemäßen Formmassen weisen verbesserte tribologische Eigenschaften auf, insbesondere einen niedrigen Reibungskoeffizienten und eine niedrige Verschleißrate. Zudem weisen die Formmassen, enthaltend die oben genannten Komponenten M, F, K, S und T, eine gute mechanische Stabilität auf. Des Weiteren zeigen die erfindungsgemäßen Formmassen eine gute Verarbeitungsstabilität.

Bevorzugt ist eine thermoplastische Formmasse, welche mindestens 5 Gew.-% der Kohlenstoff-Verstärkungsfaser F, mindestens 4 Gew.-% der Kohlenstoff-Komponente K und 5 bis 15 Gew.-% der Silicat-Komponente S enthält. Insbesondere bevorzugt ist eine thermoplastische Formmasse, welche 5 bis 20 Gew.-% der Kohlenstoff-Verstärkungsfaser F, 4 bis 15 Gew.-% der Kohlenstoff-Komponente K und 5 bis 15 Gew.-% der Silicat-Komponente S enthält. Besonders bevorzugt ist eine thermoplastische Formmassen, welche gerade 5 bis 10 Gew.-% der Kohlenstoff-Verstärkungsfaser F; 4 bis 7 Gew.-% der Kohlenstoff-Komponente K und 12 bis 15 Gew.-% der Silicat-Komponente S enthält.

Soweit nichts anderes angegeben wird beziehen sich alle Mengenangaben in Gew.-% auf die gesamte thermoplastische Formmasse.

Die vorliegende Anmeldung betrifft bevorzugt eine thermoplastische Formmasse enthaltend:

| | |
|---|---|
| 40 bis 81 Gew.-% | mindestens einer thermoplastischen Matrix M; |
| 5 bis 20 Gew.-% | mindestens einer Kohlenstoff-Verstärkungsfaser F; |
| 4 bis 15 Gew.-% | mindestens einer Kohlenstoff-Komponente K; |
| 5 bis 15 Gew.-% | mindestens einer Silicat-Komponente S, wobei die mindestens eine Silicat-Komponente S Partikel enthält, welche in einer Partikel-Dimension ein Längen/Dicken-Verhältnis von größer oder gleich 3 aufweisen; und |
| 5 bis 10 Gew.-% | mindestens eines Titandioxids T. |

Insbesondere bevorzugt betrifft die Erfindung eine thermoplastische Formmasse enthaltend

| | |
|---|---|
| 60 bis 71 Gew.-% | mindestens einer thermoplastischen Matrix M; |
| 5 bis 10 Gew.-% | mindestens einer Kohlenstoff-Verstärkungsfaser F; |
| 4 bis 7 Gew.-% | mindestens einer Kohlenstoff-Komponente K; |
| 12 bis 15 Gew.-% | mindestens einer Silicat-Komponente S, wobei die mindestens eine Silicat-Komponente S Partikel enthält, welche in einer Partikel-Dimension ein Längen/Dicken-Verhältnis von größer oder gleich 3 aufweisen; und |
| 5 bis 8 Gew.-% | mindestens eines Titandioxids T. |

Die erfindungsgemäßen Formmassen können optional weitere Komponenten, beispielsweise ausgewählt aus Farbstoffen, Pigmenten, Prozesshilfsmittel UV-Stabilisatoren enthalten. Optionale weitere Komponenten sind typischerweise im Bereich von 0 bis 10 Gew.-% in der Formmasse enthalten. Typischerweise überschreitet die Summe der optionalen weiteren Komponenten 10 Gew.-% nicht.

In einer bevorzugten Ausführungsform ergeben die oben genannten Mengen der Komponenten M, F, K, S, T und optional weitere Komponenten (Angaben in Gew.-%) zusammen 100 Gew.-% der Formmasse.

### Thermoplastische Matrix M

Als thermoplastische Matrix M eignen sich beispielsweise bekannte Thermoplasten, wie Polyestern (z.B. Polyethylenterephthalat PET), Polyethylen, Polypropylen, Polystyrol, Polystyrol-Copolymerisate (z.B. ABS), Polycarbonate, Polyamid, Polyethylen, Polyvinylchorid (PVC), Polyacrylate (z.B. Polymethylmethacrylat (PMMA)), und Hochtemperatur-wärmeformbeständige Thermoplaste (auch als Hochleistungskunststoffe bezeichnete Thermoplasten) wie Polytetrafluorethylen (PTFE), Fluor-Thermoplaste (z.B. Polyvinylidenfluorid (PVDF)), Polyarylsulfon (z.B. PESU, PSU, PPSU), Polyetherketon (z.B. Polyetheretherketon PEEK) und Polyetherimid. Unter dem Begriff Polyarylsulfon sind üblicherweise Polyarylethersulfon (PESU), Polysulfon (PSU) und Polyphenylsulfon (PPSU) zusammengefasst.

In einer besonders bevorzugten Ausführungsform handelt es sich bei der thermoplastischen Matrix M um ein Polymer ausgewählt aus der Gruppe bestehend aus Polytetrafluorethylen (PTFE), Fluor-Thermoplaste, Polyvinylidenfluorid (PVDF), Polyarylethersulfon (PESU), Polysulfon (PSU), Polyphenylsulfon (PPSU), Polyetherketon, Polyetheretherketon (PEEK) und Polyetherimid, bevorzugt ausgewählt aus der Gruppe bestehend aus Polyarylethersulfon (PESU), Polysulfon (PSU) und Polyphenylsulfon (PPSU): Insbesondere handelt es sich bei der mindestens einen polymeren Matrix um ein Polyarylethersulfon (PESU).

In einer bevorzugten Ausführungsform enthält (oder besteht) die mindestens eine thermoplastische Matrix M wiederkehrenden Einheiten der Formel (I) 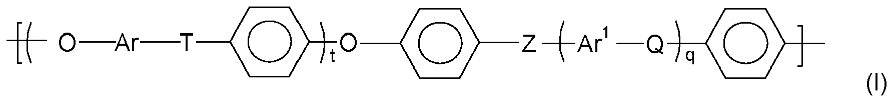 worin
- t und q: unabhängig voneinander für 0, 1, 2 oder 3 stehen,
- Q, T, Z: unabhängig voneinander jeweils eine chemische Bindung oder eine Gruppe, ausgewählt aus -O-, -S-, -SO₂-, S=O, C=O, -N=N- bedeuten,
mit der Maßgabe, dass mindestens eine der Gruppen T, Q und Z für -SO₂- steht und, wenn t und q für 0 stehen, Z für -SO₂- steht,
- Ar und Ar¹: unabhängig voneinander jeweils für eine C₆-C₁₈-Arylengruppe steht, wobei diese mit C₁-C₁₂-Alkyl-, C₆-C₁₈-Aryl-, C₁-C₁₂-Alkoxygruppen oder Halogenatomen substituiert sein kann.

Insbesondere kann die thermoplastische Matrix M aus wiederkehrenden Einheiten der Formel (I) aufgebaut sein, worin
- t und q: unabhängig voneinander für 0, 1 oder 2 stehen,
- Q, T, Z: unabhängig voneinander jeweils eine chemische Bindung oder eine Gruppe, ausgewählt aus -O- und -SO₂- bedeuten,
mit der Maßgabe, dass mindestens eine der Gruppen T, Q und Z für -SO₂- steht und, wenn t und q für 0 stehen, Z für -SO₂ steht, und
- Ar und Ar¹: unabhängig voneinander jeweils für eine C₆-C₁₂-Arylengruppe stehen.

In einer Ausführungsform bezieht sich die Erfindung auf eine Formmasse, wobei es sich bei der mindestens einen thermoplastischen Matrix M um ein Polymer handelt, welches aus wiederkehrenden Einheiten der Formel (II) aufgebaut ist oder aus diesen besteht: 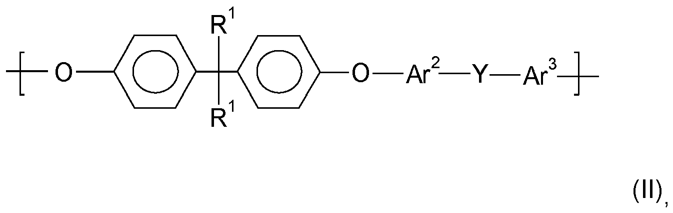 worin
- R¹: für H, C₁-C₆-Alkyl, oder-(CH₂)ₙ-COOH steht,
- n: für eine ganze Zahl von 0 bis 6 steht,
- Ar² und Ar³: unabhängig voneinander jeweils für eine C₆-C₁₈-Arylengruppe stehen, wobei diese mit einer oder mehreren C₁-C₁₂-Alkyl-, C₆-C₁₈-Aryl-, C₁-C₁₂-Alkoxygruppen oder Halogenatomen substituiert sein können, und
- Y: -SO₂- bedeutet.

Insbesondere kann die thermoplastische Matrix M aus wiederkehrenden Einheiten der Formel (II) aufgebaut sein, worin
- R¹: für H oder C₁-C₄-Alkyl steht,
- Ar² und Ar³: unabhängig voneinander jeweils für eine C₆-C₁₂-Arylengruppe stehen, und
- Y: -SO₂- bedeutet.

Je nach Synthesebedingungen können die Polyarylsulfone unterschiedliche Gruppen aufweisen. Diese Gruppen können an Atome der Polymerkette gebunden sein oder als Endgruppen der Polymerkette vorliegen. Unter den Gruppen sind solche, die sich gegenüber den weiteren Komponenten der thermoplastischen Zusammensetzung inert verhalten und solche, die mit den Komponenten reagieren können. Zu den inerten Gruppen zählen Halogen-, insbesondere Chlor-, Alkoxy-, vor allem Methoxy- oder Ethoxy-, Aryloxy-, bevorzugt Phenoxy oder Benzyloxygruppen.

Die Arylgruppen der Polyarylsulfone können dabei gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten, wie Pyridin und Halogenatome. Zu den bevorzugten Substituenten zählen Alkylreste mit bis zu 10 Kohlenstoffatomen, wie Methyl, Ethyl, iso-Propyl, n-Hexyl iso-Hexyl, C₁- bis C₁₀-Alkoxyreste, wie Methoxy, Ethoxy, n-Propoxy, n-Butoxy, Arylreste mit bis zu 20 Kohlenstoffatomen, wie Phenyl oder Naphthyl, sowie Fluor und Chlor.

Typischerweise weisen die verwendeten Polyarylethersulfone mittlere Molekulargewichte Mₙ (Zahlenmittel) im Bereich von 5.000 bis 60.000 g/mol, insbesondere 10.000 bis 30.000 g/mol auf. Typischerweise weisen die verwendeten Polyarylethersulfone relative Viskositäten von 0,20 bis 0,95 dl/g gemessen in Mischungen aus Phenol und Dichlorbenzol auf. Die relativen Viskositäten können je nach Löslichkeit der Polyarylethersulfone auch in 1 gew.-%iger N-Methylpyrrolidon-Lösung oder in 96%iger Schwefelsäure bei jeweils 20 °C bzw. 25 °C gemessen werden.

Bevorzugt handelt es sich bei der thermoplastischen Matrix um ein Polyarylethersulfon (PESU), welches eine Glastemperatur von größer 200° C aufweist. In einer anderen bevorzugten Ausführungsform handelt es sich bei der thermoplastischen Matrix um ein Polyarylethersulfon entsprechend Strukturformel (I) insbesondere mit einer Glastemperatur von über 210 °C, z.B. von 225 °C.

Es können auch Mischungen aus zwei oder mehreren unterschiedlichen Polyarylethersulfonen als thermoplastische Matrix M eingesetzt werden.

Die Herstellung erfindungsgemäß brauchbarer Polyarylethersulfone als thermoplastische Matrix M kann beispielsweise in Anlehnung an GB 1 152 035 und US 4,870,153 erfolgen. Geeignete Verfahrensbedingungen zur Synthese von Polyarylenethersulfonen sind beispielsweise in EP-A 0 113 112 und EP-A 0 135 130 beschrieben.

Beispielsweise können als thermoplastische Matrix M Polyarylethersulfone, mit mindestens einer der folgenden wiederkehrenden Struktureinheiten (I₁) bis (I₁₃) eingesetzt werden:

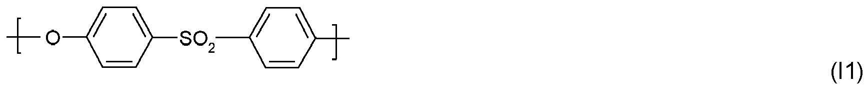

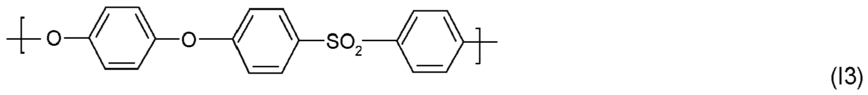

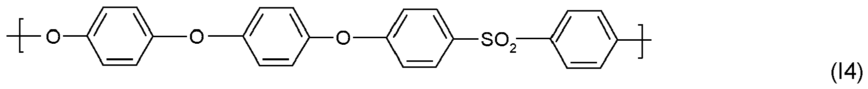

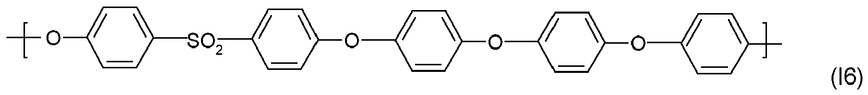

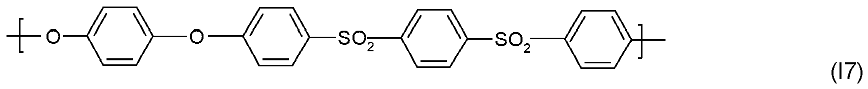

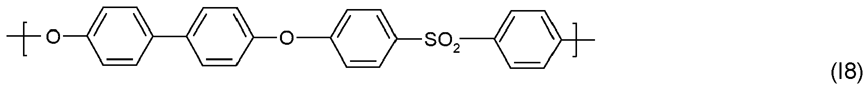

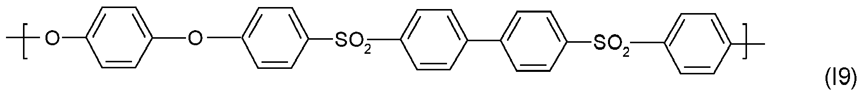

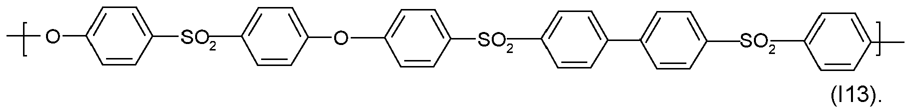

Auch die Verwendung eines Polyarylethersulfons, enthaltend die Struktureinheit (I₁₅), ist möglich.

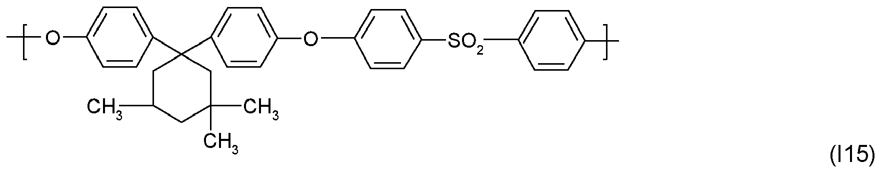

Besonders bevorzugt werden Polyarylethersulfone (PESU) verwendet, welche aus wiederkehrenden Struktureinheiten der (I1) bestehen oder diese enthalten.

Die oben genannten Beispiele der verschiedene Einheiten der Formel (I) können einzeln oder in Kombination miteinander statistisch oder in Blöcken verteilt im bevorzugt eingesetzten Polyarylethersulfon vorliegen. Bevorzugt wird als thermoplastische Matrix ein Polyarylethersulfon eingesetzt, welches aus einer der oben genannten Struktureinheiten (I₁) bis (I₁₃) besteht. Die Struktureinheiten (I₁) bis (I₁₃) geben insbesondere die einzige im Polymer vorliegende Struktureinheit (gegebenenfalls unter Ausnahme der Endgruppe) wieder.

In einer weiteren bevorzugten Ausführungsform kann es sich bei der mindestens einen polymeren Matrix (M) um ein Polyphenylsulfon (PPSU) handeln, welches wiederkehrende Struktureinheiten gemäß der folgende Formel (III) enthält oder aus diesen besteht: 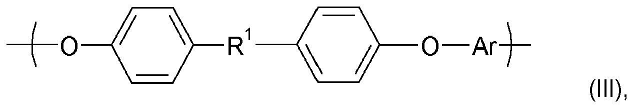 wobei
- R¹: C=O or -SO₂- , bevorzugt -SO₂-ist;
- Ar: ein divalenter aromatischer Rest ist.

Der aromatische Rest Ar ist bevorzugt ein polyzyklischer aromatischer Rest, bevorzugt ein Biphenyl-Rest.

In einer weiteren Ausführungsform kann die mindestens eine Matrix ausgewählt werden aus Polysulfonen (PSU) enthaltend (oder bestehend aus) wiederkehrenden Struktureinheiten der folgenden Formel (IV) 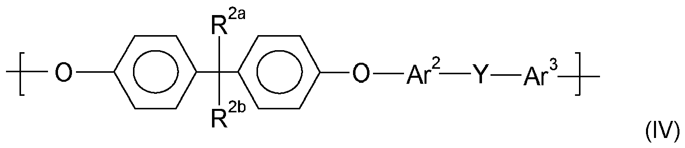 wobei:
- R^{2a}, R^{2b}: jeweils unabhängig voneinander H, C₁-C₆-alkyl, or -(CH₂)ₚ-COOH sind, wobei p eine ganze Zahl von 0 bis 6 ist;
- Ar², Ar³: jeweils unabhängig voneinander eine C₆-C₁₈-Arylene Gruppe sind, welche optional substituiert sein kann mit einer oder mehreren Gruppen ausgewählt aus C₁-C₁₂-Alkyl, C₆-C₁₈-Aryl, C₁-C₁₂-Alkoxy und Halogenatome; und
- Y: ist -SO₂-.

Bevorzugt sind in den Wiederholungseinheiten gemäß Formel (IV) R^{2a}, R^{2b} jeweils unabhängig voneinander H oder C₁-C₆-alkyl.

In einer bevorzugten Ausführungsform leitet sich das verwendete Polysulfon (PSU) von Bisphenol A und Dihalogendiphenylsulfon ab und hat eine Glastemperatur von 180 °C bis 190 °C, insbesondere von 187 °C.

Die thermoplastische Matrix M ist typischerweise in einer Menge im Bereich von 50 bis 85 Gew.-%, bevorzugt in einer Menge im Bereich von 40 bis 81 Gew.%, bevorzugt von 60 bis 71 Gew.-% in der thermoplastischen Formmasse enthalten.

### Kohlenstoff-Verstärkungsfaser F

Als Faser-Komponente wird erfindungsgemäß mindestens eine Kohlenstoff-Verstärkungsfaser F eingesetzt. Bevorzugt können zusammen mit der Kohlenstoff-Verstärkungsfaser F weitere Faserstoffe eingesetzt werden. Die weiteren Faserstoffe können ausgewählt sein aus den bekannten Fasern, welche typischerweise als Füllstoff in thermoplastischen Formmassen eingesetzt werden.

Typischerweise können als weitere Faserstoffe eingesetzt werden:
a) anorganischen Verstärkungsfasern, wie Borfasern, Glasfasern, Silicat-Fasern, Kieselsäure-Fasern, Mineralfasern, keramische Fasern und Basaltfasern;
b) organischen Verstärkungsfasern, wie Aramidfasern, Polyesterfasern, Nylonfasern, Polyethylenfasern und Plexiglasfasern;
c) und Naturfasern, wie Holzfasern, Flachsfasern, Hanffasern und Sisalfasern.

Insbesondere eignen sich anorganische mineralische Verstärkungsfasern als weitere Faserstoffe, z.B. Glasfasern, Mineralfasern.

Die erfindungsgemäß verwendete Kohlenstoff-Verstärkungsfaser F kann in Form von Kurzfasern, Langfasern oder als Gemisch von Kurz- und Langfasern eingesetzt werden. Hierbei weisen die Kurzfasern typischerweise eine mittlere Faserlänge im Bereich von 0,1 bis 1 mm auf. Es können auch Kohlenstoff-Verstärkungsfasern mit einer mittleren Faserlänge im Bereich von 0,5 bis 1 mm eingesetzt werden.

Besonders bevorzugt wird als mindestens eine Kohlenstoff-Verstärkungsfaser F eine Langfaser eingesetzt. Insbesondere weist die mindestens eine Kohlenstoff-Verstärkungsfaser F, welche bei der Herstellung der thermoplastischen Formmasse eingesetzt wird, eine mittlere Faserlänge im Bereich von 1 bis 50 mm, bevorzugt von 1 bis 10 mm, insbesondere bevorzugt im Bereich von 3 bis 6 mm auf.

Die mittlere Faserlänge der in der fertigen Formmasse vorliegenden Fasern kann sich insbesondere durch die Verarbeitungsschritte (z.B. Extrudieren) verändern, insbesondere liegen in der thermoplastischen Formmasse Fasern mit geringerer Faserlänge im Vergleich zur eingesetzten Faser vor.

Bevorzugt weist die mindestens eine Kohlenstoff-Verstärkungsfaser F einen mittleren Faser-Durchmesser im Bereich von 5 bis 10 µm, bevorzugt 5 bis 8 µm, besonders bevorzugt von 6 bis 7 µm, auf. Bevorzugt weist die mindestens eine Kohlenstoff-Verstärkungsfaser F eine Dichte (bei 20 °C) im Bereich von 1 bis 2 g/cm³, bevorzugt von 1,5 bis 2 g/cm³ auf. Bevorzugt weist die mindestens eine Kohlenstoff-Verstärkungsfaser F einen Kohlenstoffanteil von größer oder gleich 95 Gew.-% (bezogen auf die Kohlenstoff-Verstärkungsfaser F) auf.

In einer bevorzugten Ausführungsform handelt es sich bei der mindestens einen Kohlenstoff-Verstärkungsfaser F um eine Oberflächen-behandelte Kohlenstofffaser. Typischerweise wird die Oberfläche von Kohlenstoff-Verstärkungsfasern mit organischen Substanzen, wie beispielsweise Polyurethan, aromatischen Polymer, Epoxiharzen oder Glycerin behandelt (z.B. Schlichten), beispielsweise um die Fasereigenschaften zu verbessern oder die Verträglichkeit mit dem Matrixmaterial zu erhöhen. Bevorzugt weist die mindestens eine Kohlenstoff-Verstärkungsfaser F einen Anteil an Oberflächenbehandlung im Bereich von 0,5 bis 6,5 Gew.-%, bevorzugt 1 bis 3 Gew.-% (bezogen auf die Kohlenstoff-Verstärkungsfaser F) auf.

In einer besonders bevorzugten Ausführungsform der Erfindung handelt es sich bei der mindestens einen Kohlenstoff-Verstärkungsfaser F um eine Oberflächen-behandelte Kohlenstofffaser, insbesondere um eine mit Glycerin und/oder aromatischen Polymer Oberflächen-behandelte Kohlenstofffaser, welche einen mittleren Faserdurchmesser im Bereich von 5 bis 10 µm aufweist.

Geeignete Kohlenstoff-Verstärkungsfasern F sind beispielsweise Kohlenstoff-Fasern vom Typ Sigrafil C® (SGL Carbon Group).

Die mindestens eine Kohlenstoff-Verstärkungsfaser F ist bevorzugt in einer Menge im Bereich von 0,5 bis 20 Gew.-%, bevorzugt von 5 bis 20 Gew.-%, besonders bevorzugt von 5 bis 10 Gew.% (jeweils bezogen auf die gesamte thermoplastische Formmasse) in der thermoplastischen Formmasse enthalten.

### Kohlenstoff-Komponente K

Bei der mindestens einen Kohlenstoff-Komponente K handelt es sich insbesondere um die bekannten natürlichen und synthetischen Kohlenstoff-Materialien in fester Form enthaltend im Wesentlichen elementaren Kohlenstoff. Die Kohlenstoff-Komponente K kann in verschiedenen Formen und Mischungen dieser Formen vorliegen und gegebenenfalls Verunreinigungen enthalten. Die mindestens eine Kohlenstoff-Komponente K kann insbesondere ausgewählt werden aus amorphen Kohlenstoff, Verkokungsprodukten (z.B. Ruß, Industrieruß (carbon black)), Graphit, graphitischem Kohlenstoff und teil-graphitischem Kohlensoff, graphitiertem Kohlenstoff oder teil-graphitiertem Kohlenstoff. Unter graphitischem Kohlenstoff oder teil-graphitischem Kohlenstoff versteht man typischerweise Kohlenstoffarten, die das Element Kohlenstoff in der allotrophen Form des Graphits enthalten, unabhängig von vorhandenen Strukturdefekten und Anteil des Graphit-Strukturanteils. Typischerweise enthalten teil-graphitische Kohlenstoffe einen Anteil an amorphen Kohlenstoff und ggf. Verunreinigungen und einen Anteil in graphitartiger Struktur. Unter graphitiertem oder teil-graphitiertem Kohlenstoff versteht man typischerweise einen graphitischen Kohlenstoff, der durch eine Graphitisierungsbehandlung (Hochtemperatur-Verfahren ausgehend von verschiedenen Kohlenstoff-Rohmaterialen bei Temperaturen von etwa 1.900 bis 2.700 °C) entstanden ist.

Bevorzugt handelt es sich bei der mindestens einen Kohlenstoff-Komponente K um einen graphitischen Kohlenstoff und/oder einen teil-graphitischen Kohlenstoff, insbesondere handelt es sich bei der mindestens einen Kohlenstoff-Komponente K um einen graphitierten oder teil-graphitierten Kohlenstoff. Diese Kohlenstoffe sind beispielsweise als Füllstoffe vom Typ RGC®, resilient graphitic carbon (Superior Graphite) bekannt.

Bevorzugt handelt es sich bei der mindestens einen Kohlenstoff-Komponente K um einen teil-graphitischen Kohlenstoff, der einen Anteil an graphitartiger Struktur von größer oder gleich 40 Gew.-%, insbesondere im Bereich von 40 bis 95 Gew.-%, bevorzugt von 80 bis 95 Gew.-% (bezogen auf die gesamte Kohlenstoff-Komponente K) aufweist. Bevorzugt weist der eingesetzte teil-graphitische Kohlenstoff einen mittleren Partikeldurchmesser (D₅₀-Wert) im Bereich von 5 bis 20 µm auf. Bevorzugt weist der eingesetzte teil-graphitische Kohlenstoff einen Kohlenstoffanteil im Bereich von 99 bis 99,9 Gew.-%, eine poröse Struktur mit einer Dichte im Bereich von 1,5 bis 2 g/cm³ und eine spezifischen Oberfläche im Bereich von 10 bis 20 m²/g auf.

Bei der erfindungsgemäß eingesetzten Kohlenstoff-Komponente K handelt es sich insbesondere um einen partikelförmigen Kohlenstoff-Füllstoff. Im Sinne der vorliegenden Anmeldung bezeichnet ein partikelförmiger Füllstoff (in Abgrenzung zu einem Faser-Füllstoff) einen Füllstoff, der im Wesentlichen aus Partikeln mit einem L/D-Verhältnis von kleiner 100 besteht. Bevorzugt weist die mindestens eine Kohlenstoff-Komponente K einen mittleren Partikeldurchmesser (D₅₀-Wert) im Bereich von 5 bis 100 µm, bevorzugt von 5 bis 20 µm auf. Bevorzugt weist die mindestens eine Kohlenstoff-Komponente einen Kohlenstoffanteil im Bereich von 80 bis 99,9 Gew.-% (bezogen auf die Kohlenstoff-Komponente K), bevorzugt im Bereich von 99 bis 99,9 Gew.-% auf. Bevorzugt weist die mindestens eine Kohlenstoff-Komponente eine poröse Struktur mit einer Dichte im Bereich von 1,5 bis 2 g/cm³ und einer spezifischen Oberfläche im Bereich von 10 bis 20 m²/g auf.

Als Kohlenstoff-Komponente K sind bevorzugt Kohlenstoffe vom Typ RGC^{®}, resilient graphitic carbon (Superior Graphite) geeignet, beispielsweise RGC^{®} 39 A.

Die mindestens eine Kohlenstoff-Komponente K ist bevorzugt in einer Menge (bezogen auf die gesamte thermoplastische Formmasse) im Bereich von 4 bis 15 Gew.-%, bevorzugt von 4 bis 10 Gew.-%, besonders bevorzugt von 4 bis 7 Gew.% in der thermoplastischen Formmasse enthalten. Formmassen mit einem Anteil an Kohlenstoff-Komponente K von höchstens 10 Gew.-% weisen eine verbesserte Verarbeitbarkeit auf.

### Silicat-Komponente S

Bei der mindestens einen Silicat-Komponente S handelt es sich bevorzugt um ein Calcium-Silicat, bevorzugt um ein Kettensilicat und/oder Schichtsilicat, insbesondere um ein Calcium-Kettensilicat der allgemeinen Summenformel Ca[SiO₃].

Typischerweise sind Calcium-Silicate auf der Basis des natürlichen Silicats Wollastonit geeignet, wobei diese Silicate gegebenenfalls durch verschiedene Aufbereitungsschritte (z.B. gemahlen) erhalten werden können.

Die mindestens eine Silicat-Komponente S enthält erfindungsgemäß Partikel, welche in einer (bzw. in genau einer) Partikel-Dimension ein Längen/Dicken-Verhältnis von größer oder gleich 3 aufweisen. Insbesondere weisen die Partikel der Silicat-Komponente S in einer Partikel-Dimension ein L/D-Verhältnis im Bereich von 3 bis 100, insbesondere im Bereich von 3 bis 50, bevorzugt im Bereich von 3 bis 15, besonders bevorzugt im Bereich von 3 bis 8 auf.

Insbesondere weisen mindestens 50 Gew.-%, bevorzugt mindestens 80 Gew.-%, insbesondere bevorzugt mindestens 90 Gew.-% und besonders bevorzugt mindestens 99 Gew.-% (bezogen auf die Silicat-Komponente S), der Partikel der mindestens einen Silicat-Komponente S ein oben beschriebenes Langen/Dicken-Verhältnis (L/D-Verhältnis) in einer Partikel-Dimension von größer oder gleich 3 auf.

Bevorzugt enthält (oder besteht) die mindestens eine Silicat-Komponente S (aus) Partikeln, welche eine mittlere Partikellänge im Bereich von 5 bis 30 µm, bevorzugt von 10 bis 20 µm, und einen mittleren Partikeldurchmesser im Bereich von 0,5 bis 3 µm, bevorzugt von 1 bis 2 µm aufweisen. In einer Ausführungsform enthält die mindestens eine Silicat-Komponente S so genannte block-förmige und/oder nadelförmige Partikel.

Bevorzugt handelt es sich bei der mindestens einen Silicat-Komponente S um ein Calcium-Silicat, bei dem mindestens 50 Gew.-%, bevorzugt mindestens 80 Gew.-%, insbesondere bevorzugt mindestens 90 Gew.-% und besonders bevorzugt mindestens 99 Gew.-% der Partikel in einer Partikel-Dimension ein Langen/Dicken-Verhältnis (L/D-Verhältnis) von größer oder gleich 3, insbesondere bevorzugt im Bereich von 3 bis 15 aufweisen.

Typischerweise weist die mindestens eine Silicat-Komponente S eine Dichte im Bereich von 2 bis 3,5 g/cm³, insbesondere im Bereich von 2,5 bis 3 g/m³ auf. Typischerweise weist die mindestens eine Silicat-Komponente S eine Mohs-Härte im Bereich von 4,5 bis 5 auf. Bevorzugt weist die mindestens eine Silicat-Komponente S einen mittleren Teilchendurchmesser (D₅₀-Wert) im Bereich von 2 µm bis 10 µm, insbesondere von 2 µm bis 5 µm auf.

In einer bevorzugten Ausführungsform handelt es sich bei der Silicat-Komponente S um ein Oberflächen-behandeltes Silicat. Typischerweise erfolgt die Oberflächenbehandlung von Silicat-Füllstoffen mit organischen und/oder silicium-organischen Verbindungen, beispielsweise mit Aminosilan, Epoxysilan, Methacrylsilan, Methylsilan oder Vinylsilan. Insbesondere handelt es sich bei der mindestens einen Silicat-Komponente S um ein mit Epoxysilan Oberflächen-behandeltes Silicat (insbesondere ein Silicat basierend auf Wollastonit).

Geeignete Silicat-Komponenten sind beispielsweise Füllstoffe, die auf dem natürlichen Calcium-meta-Silicat Wollastonit basieren, z.B. Tremin® (Quarzwerke Gruppe), insbesondere vom Typ Tremin ® 283 oder 939.

Die mindestens eine Silicat-Komponente S ist bevorzugt in einer Menge im Bereich von 5 bis 15 Gew.-%, bevorzugt von 10 bis 15 Gew.-%, besonders bevorzugt von 12 bis 15 Gew.% (bezogen auf die Gesamtmenge an thermoplastischer Formmasse) in der thermoplastischen Formmasse enthalten.

### Titandioxid T

Bei der mindestens einen Titandioxid-Komponente T handelt es sich insbesondere um eine natürliches oder synthetisches Titandioxid-Mineral. Bevorzugt handelt es sich um ein Rutil-Mineral.

Typischerweise kann das Titandioxid eine Oberflächenbehandlung aufweisen und/oder kann durch verschiedene Schritte (z.B. mahlen) aufgearbeitet worden sein. Typischerweise werden Titandioxid-Füllstoffe durch eine Oberflächenbehandlung mit silicium-organischen oder anorganischen Verbindungen modifiziert. Als silicium-organischen Verbindungen kommen beispielsweise Aminosilan, Epoxisilan, Methacrylsilan, Methylsilan und Vinylsilan zur Anwendung. Es kann auch ein Titandioxid verwendet werden, welches eine anorganische Oberflächen-Behandlung, z.B. mit Aluminium-oder Siliciumverbindungen aufweist.

Typischerweise weist das mindestens eine Titandioxid einen TiO₂ -Gehalt von 80 bis 99 %, bevorzugt von 90 bis 95 % auf. Typischerweise weist das verwendete Titandioxid eine Dichte im Bereich von 3,8 bis 4,2 g/cm³ auf.

Geeignet sind beispielsweise Titan-Füllstoffe vom Typ Kronos ® (Kronos Inc.).

Das mindestens eine Titandioxid T ist bevorzugt in einer Menge im Bereich von 2 bis 10 Gew.-%, bevorzugt von 5 bis 10 Gew.-%, besonders bevorzugt von 5 bis 8 Gew.% in der thermoplastischen Formmasse enthalten.

Eine bevorzugte Ausführungsform der Erfindung ist gerichtet auf eine thermoplastische Formmasse enthaltend:
- 40 bis 81 Gew.-%, bevorzugt 60 bis 71 Gew.-%: mindestens eines Polyarylethersulfons als thermoplastische Matrix M;
- 5 bis 20 Gew.-%, bevorzugt 5 bis 10 Gew.-%: mindestens einer Kohlenstoff-Verstärkungsfaser F;
- 4 bis 15 Gew.-%, bevorzugt 4 bis 7 Gew.-%: mindestens eines partikelförmigen, graphitischen Kohlenstoffs und/oder eines partikelförmigen, teil-graphitischen Kohlenstoffs als Kohlenstoff-Komponente K;
- 5 bis 15 Gew.-%, bevorzugt 12 bis 15 Gew.-%: mindestens eines Calcium-Silicats, bei dem mindestens 50 Gew.-% der Partikel (bezogen auf die Silicat-Komponente S) in einer Partikel-Dimension ein Längen/Dicken-Verhältnis von größer oder gleich 3 aufweisen, als Silicat-Komponente S;
- 5 bis 10 Gew.-%, bevorzugt 5 bis 8 Gew.-%: mindestens eines Titandioxids T.

Gegenstand der Erfindung ist auch ein Verfahren zur Herstellung der oben beschriebenen thermoplastischen Formmassen, wobei die thermoplastische Matrix M mit den Komponenten F, K, S und T und optional weitere Komponenten vermischt wird. Das Mischen der Komponenten erfolgt typischerweise durch Erwärmen der thermoplastischen Matrix M und Zugeben der Füllstoff-Komponenten F, K, S und T. Es ist auch möglich zunächst mindestens zwei der Füllstoff-Komponenten zu vermischen und dann zur thermoplastischen Matrix zugeben. Typischerweise kann das Herstellen der erfindungsgemäßen thermoplastischen Formmasse durch Extrudieren erfolgen. Typischerweise erfolgt die Herstellung der beschriebenen thermoplastischen Formmassen bei einer Temperatur im Bereich von 200 bis 400 °C, insbesondere von 360 bis 390 °C.

Weiterhin betrifft die vorliegende Erfindung ein Formteil hergestellt aus einer oben beschriebenen erfindungsgemäßen Formmasse. Die vorliegende Erfindung betrifft ein Formteil enthaltend eine oben beschriebene erfindungsgemäße thermoplastische Formmasse.

Bei den Formteilen handelt es sich insbesondere um Haushaltsartikel, Haushaltsgeräte, elektronische Bauteile, Gartengeräte, medizinisch-technische Geräte, Kfz-Bauteile oder Karosserieteile. Insbesondere handelt es sich um Formteile, die einer erhöhten mechanischen Belastung standhalten müssen.

Bevorzugt kann es sich bei dem erfindungsgemäßen Formteil um ein Formteil ausgewählt aus Zahnrädern, Pumpengehäusen, Pumpenteilen, Ventilgehäusen, Ventilteilen, Dichtungen, Dichtungsringen, Getriebesteuerungen, Kettenführungen, Gleitlagern, Gleitschuhen, Kolben, Kolbenringen, Walzen- und Kolbenbeschichtungen. Bevorzugt handelt es sich bei dem erfindungsgemäßen Bauteil um eine Ölpumpe oder einen Ölstromregler oder Teile davon (z.B. für ein Kraftfahrzeug), insbesondere handelt es sich um bewegliche Teile einer Ölpumpe oder eines Ölstromreglers.

Die vorliegende Erfindung ist zudem gerichtet auf die Verwendung einer oben beschriebenen thermoplastischen Formmasse zur Herstellung eines Formteils zur Anwendung im Fahrzeugbau, insbesondere Automobilbau (z.B. als Ölpumpe, Getriebesteuerung, Ölregelkolben, Gehäuse), im Lebensmittel- und Haushaltsbereich (z.B. als Mikrowellengeschirr, Beschichtung); im Apparatebau (z.B. als Pumpenteil, Füllkörper für Trenn-Kolonnen, Dichtungen, Abdeckungen, Gehäuse, Filter-Membran), in der Heizungs- und Sanitärtechnik (z.B. in Heißwasserzählern, Laufräder in Heizungsumwälzpumpen, Innenteile von Armaturen), in der Medizintechnik oder in der Elektronik.

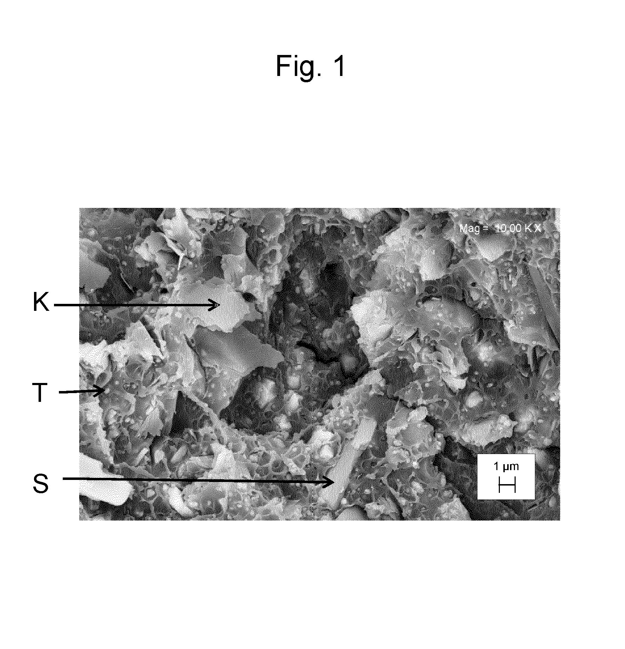

Die Figur 1 zeigt eine rasterelektronenmikroskopische Aufnahme eines Prüfkörpers aus der erfindungsgemäßen thermoplastischen Formmasse (Probe-Nr. 1 gemäß Beispiel 1). Man erkennt die folgenden einzelnen Füllstoff-Komponenten eingebettet in der thermoplastischen Matrix: die Kohlenstoff-Komponente K (mit K gekennzeichnet), die Silicat-Komponente S (mit S gekennzeichnet) und das Titandioxid T (mit T gekennzeichnet).

Die vorliegende Erfindung soll durch die nachfolgenden Beispiele näher erläutert werden.

### Beispiel 1: Herstellung von thermoplastischen Formmassen

Es wurden verschiedene Formmassen unter Verwendung der folgenden Komponenten hergestellt:
Thermoplastische Matrix M:
   Polyethersulfon PESU (Ultrason E 2010, BASF)
Kohlenstoff-Verstärkungsfaser F:
   F1: Kohlenstoff-Faser, durchschnittlichen Faserlänge 6 mm, durchschnittlicher Faserdurchmesser 7 µm, Oberflächenbehandlung mit einem aromatischen Polymer, Gehalt Oberflächenmodifizierung 1,5 - 6,5 Gew.-% (Sigrafil C® 30 S006 APS SGL Carbon)
Weiterer Faserstoff:
   F2: Mineralische Faser auf Silicatbasis mit einer durchschnittlichen Faserlänge von 125 µm
Kohlenstoff-Komponente K:
   Teil-graphitierterKohlenstoff mit einem Anteil an graphitartiger Struktur im Bereich von 82 bis 93 Gew.-% (RGC 39A, Superior Graphit Europe)
Silicat-Komponente S:
   Calcium-meta-Silicat (Ca[SiO₃]) auf Wollastonit-Basis, Oberflächen-Modifizierung mit Epoxysilan (Tremin 283 EST 800, Quarzwerke GmbH), L/D-Verhältnis von 3
Titandioxid T:
   Rutil-Pigment, Oberflächen-Behandlung mit Aluminium- und Siliciumverbindungen sowie mit einer Siliconverbindung (Kronos 2220), Kantenlänge in Bereich von 0,5 bis 2 µm.

Die oben angegebenen Komponenten wurden in einem Laborextruder (Typ Berstorff, ZE 25x44) bei einer Temperatur im Bereich von 360 bis 390 °C (Einzug 95 °C, Düse 390 °C) und einem Schmelzdruck von 43 bar vermischt. Die Antriebleistung betrug 2,8 kW und die Drehzahl 300 U/min. Es wurde eine Menge von etwa 5 kg thermoplastischer Formmasse bei einem Durchsatz von 10 kg/h hergestellt

Es wurden die in Tabelle 1 angegebenen thermoplastischen Zusammensetzungen hergestellt.

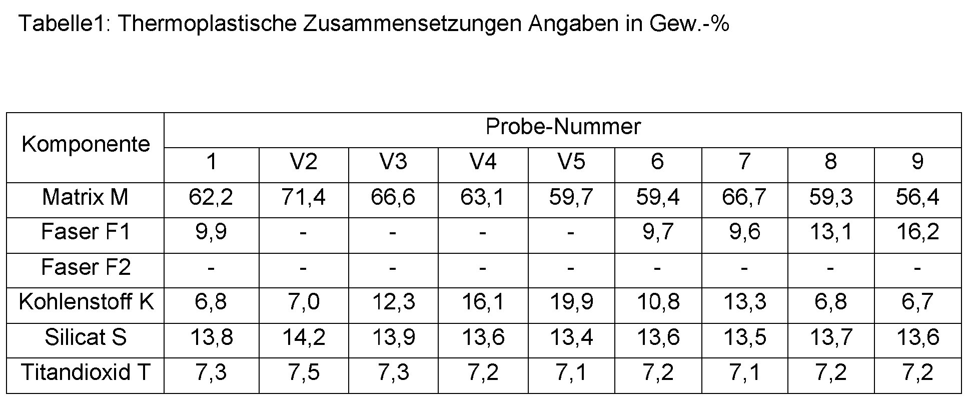

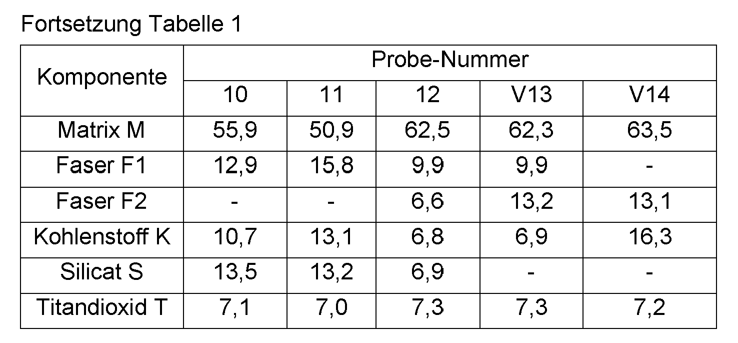

Die oben angegebenen Zusammensetzungen der Proben wurden mittels thermogravimetrischer Analyse, mittels Dichtemessungen und mittels des in N-Methylpyrrolidon (NMP) unlöslichen Rückstands bestätigt.

Zusätzlich zu den in Tabelle 1 beschriebenen thermoplastischen Zusammensetzungen wurde als Referenz (Ref) ein handelsüblicher tribologisch optimierter Kunststoff auf Basis von Polyarylethersulfon enthaltend 10 Gew.-% Kohlenstofffaser, 10 Gew.-% PTFE, und 10 Gew.-% Graphit untersucht.

### Beispiel 2: Tribologische und mechanische Untersuchungen

An Probeformteile aus den in Beispiel 1 beschrieben Formmassen, der thermoplastischen Matrix und der Referenz wurden folgende tribologische Untersuchungen und Untersuchungen zur mechanischen Festigkeit durchgeführt:
i) Höhenverschleißrate, spezifische Verschleißrate, Gleitreibungskoeffizient gemäß ASTM G137 mit überwiegend normaler Faserorientierung
ii) Quasistatischer Zugversuch nach ISO 527 zur Bestimmung des Zugmoduls, der Zugfestigkeit und der Bruchdehnung(mit überwiegender Faserorientierung in Zugrichtung).

Die Ergebnisse bezüglich der tribologischen und mechanischen Charakterisierung zusammen mit den jeweils ermittelten Vertrauensbereichen sind in der Tabelle 2 dargestellt:

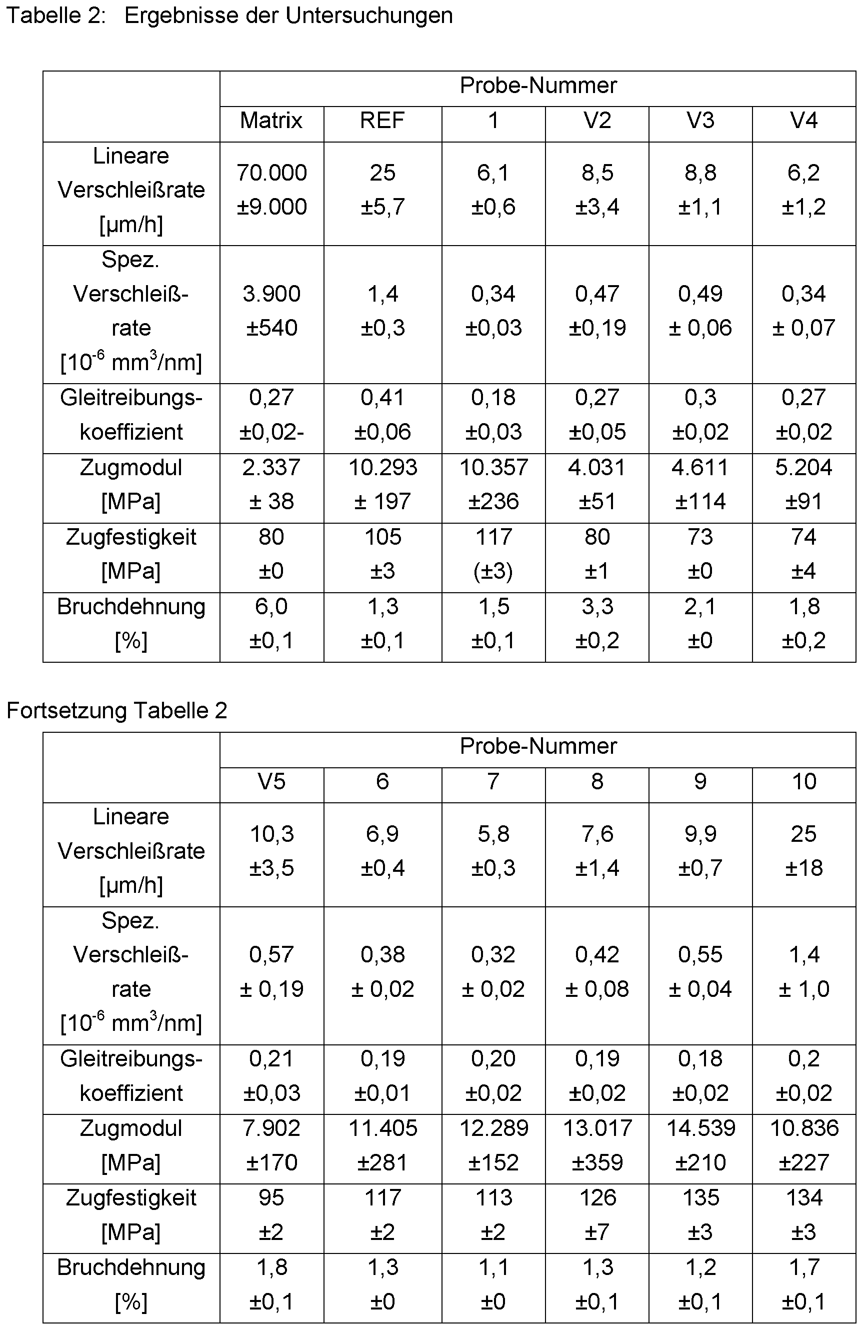

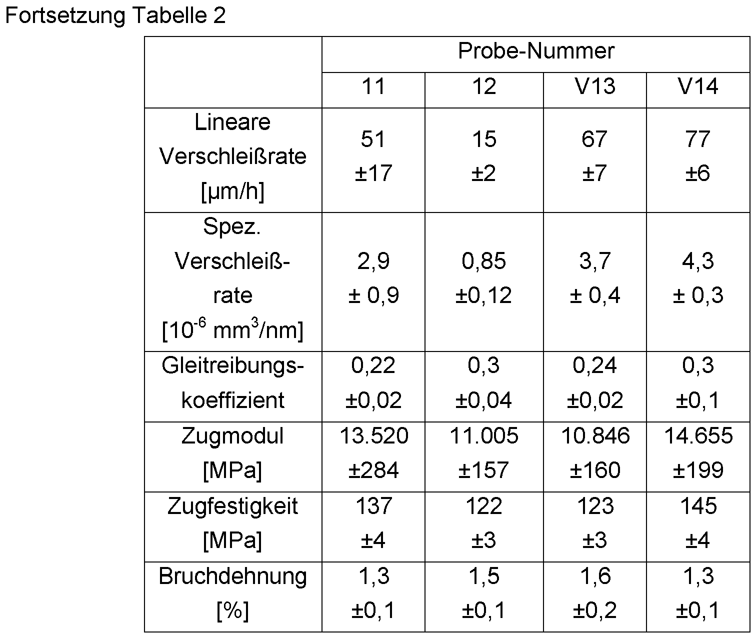

### Beispiel 3: Elektronenmikroskopische Aufnahmen

Von der thermoplastischen Zusammensetzung gemäß Versuch 1 (Probe Nr. 1) wurden rasterelektronenmikroskopische Aufnahmen gemacht. Es konnte gezeigt werden, dass die Füllstoffe gut de-agglomeriert und homogen verteilt in der thermoplastischen Matrix vorliegen. Zudem zeigen die rasterelektronischen Aufnahmen, dass die thermoplastische Matrix gut an den Füllstoffen, insbesondere der Faser-Komponente haftet.

In der elektronenmikroskopischen Aufnahme sind die Kohlenstoff-Komponente K, die Silicat-Komponente S und das Titandioxid T markiert.

## Patentansprüche

1. Thermoplastische Formmasse enthaltend
i) mindestens eine thermoplastische Matrix M;
ii) mindestens eine Kohlenstoff-Verstärkungsfaser F;
iii) mindestens eine Kohlenstoff-Komponente K;
iv) mindestens eine Silicat-Komponente S, wobei die mindestens eine Silicat-Komponente S Partikel enthält, welche in einer Partikel-Dimension ein Längen/Dicken-Verhältnis von größer oder gleich 3 aufweisen; und
v) mindestens ein Titandioxid.T.

2. Thermoplastische Formmasse gemäß Anspruch 1, **dadurch gekennzeichnet, dass** die Formmasse
| | |
|---|---|
| 40 bis 81 Gew.-% | mindestens einer thermoplastischen Matrix M; |
| 5 bis 20 Gew.-% | mindestens einer Kohlenstoff-Verstärkungsfaser F; |
| 4 bis 15 Gew.-% | mindestens einer Kohlenstoff-Komponente K; |
| 5 bis 15 Gew.-% | mindestens einer Silicat-Komponente S, wobei die mindestens eine Silicat-Komponente S Partikel enthält, welche in einer Partikel-Dimension ein Längen/Dicken-Verhältnis von größer oder gleich 3 aufweisen; und |
| 5 bis 10 Gew.-% | mindestens eines Titandioxids T |
enthält.

3. Thermoplastische Formmasse gemäß einem der Ansprüche 1 oder 2, **dadurch gekennzeichnet, dass** es sich bei der thermoplastische Matrix M um ein Polymer handelt ausgewählt aus der Gruppe bestehend aus Polytetrafluorethylen, Fluor-Thermoplaste, Polyvinylidenfluorid, Polyarylethersulfon, Polysulfon, Polyphenylsulfon, Polyetherketon, Polyetheretherketon und Polyetherimid

4. Thermoplastische Formmasse gemäß einem der Ansprüche 1 bis 3, **dadurch gekennzeichnet, dass** die mindestens eine thermoplastische Matrix M wiederkehrenden Einheiten der Formel (I) enthält 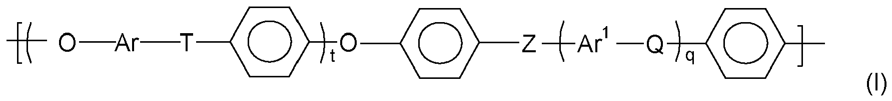 worin
t und q unabhängig voneinander für 0, 1, 2 oder 3 stehen,
Q, T, Z unabhängig voneinander jeweils eine chemische Bindung oder eine Gruppe, ausgewählt aus -O-, -S-, -SO₂-, S=O, C=O, -N=N- bedeuten, mit der Maßgabe, dass mindestens eine der Gruppen T, Q und Z für -SO₂- steht und, wenn t und q für 0 stehen, Z für -SO₂- steht,
Ar und Ar¹ unabhängig voneinander jeweils für eine C₆-C₁₈-Arylengruppe steht, wobei diese mit C₁-C₁₂-Alkyl-, C₆-C₁₈-Aryl-, C₁-C₁₂-Alkoxygruppen oder Halogenatomen substituiert sein kann.

5. Thermoplastische Formmasse gemäß einem der Ansprüche 1 bis 4, **dadurch gekennzeichnet, dass** es sich bei der mindestens einen Kohlenstoff-Verstärkungsfaser F um eine Oberflächen-behandelte Kohlenstofffaser handelt, welche einen mittleren Faserdurchmesser im Bereich von 5 bis 10 µm aufweist.

6. Thermoplastische Formmasse gemäß einem der Ansprüche 1 bis 5, **dadurch gekennzeichnet, dass** es sich bei der mindestens einen Kohlenstoff-Komponente K um einen graphitischen Kohlenstoff und/oder einen teil-graphitischen Kohlenstoff handelt.

7. Thermoplastische Formmasse gemäß einem der Ansprüche 1 bis 6, **dadurch gekennzeichnet, dass** es sich bei der mindestens eine Silicat-Komponente S um ein Calcium-Silicat handelt, bei dem mindestens 50 Gew.-% der Partikel in einer Partikel-Dimension ein Längen/Dicken-Verhältnis von größer oder gleich 3 aufweisen.

8. Thermoplastische Formmasse gemäß einem der Ansprüche 1 bis 7, **dadurch gekennzeichnet, dass** es sich bei der mindestens einen Silicat-Komponente S um ein Calcium-Kettensilicat der allgemeinen Summenformel Ca[SiO₃] handelt.

9. Thermoplastische Formmasse gemäß einem der Ansprüche 1 bis 8, **dadurch gekennzeichnet, dass** es sich bei dem mindestens einen Titandioxid T um ein Oberflächen-behandeltes Titandioxid in Rutil-Form handelt.

10. Thermoplastische Formmasse gemäß einem der Ansprüche 1 bis 9, **dadurch gekennzeichnet, dass** die Formmasse
| | |
|---|---|
| 40 bis 81 Gew.-% | mindestens eines Polyarylethersulfons als thermoplastische Matrix M; |
| 5 bis 20 Gew.-% | mindestens einer Kohlenstoff-Verstärkungsfaser F; |
| 4 bis 15 Gew.-% | mindestens eines partikelförmigen, graphitischen Kohlenstoffs und/oder eines partikelförmigen, teil-graphitischen Kohlenstoffs als Kohlenstoff-Komponente K; |
| 5 bis 15 Gew.-% | mindestens eines Calcium-Silicats, bei dem mindestens 50 Gew.-% der Partikel (bezogen auf die Silicat-Komponente S) in einer Partikel-Dimension ein Längen/Dicken-Verhältnis von größer oder gleich 3 aufweisen, als Silicat-Komponente S; |
| 5 bis 10 Gew.-% | mindestens eines Titandioxids T |
enthält.

11. Verfahren zur Herstellung einer thermoplastischen Formmasse gemäß einem der Ansprüche 1 bis 10, bei dem die thermoplastische Matrix M mit den Komponenten F, K, S und T und optional weiteren Komponenten vermischt wird.

12. Formteil enthaltend eine thermoplastische Formmasse gemäß einem der Ansprüche 1 bis 10.

13. Formteil gemäß Anspruch 12, **dadurch gekennzeichnet, dass** es sich um ein Formteil ausgewählt aus Zahnrädern, Pumpengehäusen, Pumpenteilen, Ventilgehäusen, Ventilteilen, Dichtungen, Dichtungsringen, Getriebesteuerungen, Kettenführungen, Gleitlagern, Gleitschuhen, Kolben, Kolbenringen, Walzen- und Kolbenbeschichtungen handelt.

14. Formteil gemäß einem der Ansprüche 12 oder 13, **dadurch gekennzeichnet, dass** es sich um eine Ölpumpe oder einen Ölstromregler oder Teile davon handelt.

15. Verwendung einer thermoplastischen Formmasse gemäß einem der Ansprüche 1 bis 10 zur Herstellung eines Formteils zur Anwendung im Fahrzeugbau, im Lebensmittel- und Haushaltsbereich, im Apparatebau, in der Heizungs- und Sanitärtechnik, in der Medizintechnik oder in der Elektronik.
